# EUROPEAN PATENT APPLICATION

(11) **EP 4 368 967 A1**
(43) Date of publication of application: **15.05.2024**
(21) Application number: 23208283.4
(22) Date of filing: 07.11.2023
(51) Int. Cl.: G01N 17/00

(54) **DEW CONDENSATION TESTING DEVICE AND DEW CONDENSATION TESTING METHOD**

(30) Priority: 09.11.2022 JP 2022179725
(71) Applicant: Espec Corp., Kita-ku Osaka-shi Osaka 530-8550 (JP)
(72) Inventor: KAWAMURA, Hayato, Osaka, 530-8550 (JP)
(74) Representative: Daub, Thomas

(57) **Abstract**

A dew condensation testing device, including: a test chamber configured such that a test piece is disposed therein; an air conditioning means configured to adjust an environment in the test chamber; a water reservoir which is disposed in the test chamber and is configured to be supplied with water from outside the test chamber; and a heating means. The dew condensation testing device is configured to heat water in the water reservoir by using the heating means to increase a humidity in the test chamber so as to generate dew condensation on the test piece. The dew condensation testing device includes a heat exchanger, the heat exchanger being in the test chamber, and water which has passed through the heat exchanger is to be supplied to the water reservoir.

## Description

### TECHNICAL FIELD

The present invention relates to a dew condensation testing device for causing dew condensation on a test piece. Also, the present invention relates to a dew condensation testing method.

### BACKGROUND ART

A dew condensation test is known in which a test piece is exposed to a high-humidity environment to cause dew condensation on the test piece. The dew condensation test is performed using, for example, a dew condensation testing device disclosed in Patent Literature 1.

In the dew condensation testing device disclosed in Patent Literature 1, a water reservoir is installed in a test chamber. A heater is built in the water reservoir. Water in the water reservoir is heated by the heater and is vaporized to increase a humidity in the test chamber.

Patent Literature 1 discloses an example of a dew condensation test. The dew condensation test disclosed in Patent Literature 1 is as follows.

In the dew condensation test disclosed in Patent Literature 1, water is filled in the water reservoir in advance.

First, the inside of the test chamber is maintained in a relatively low temperature state, and the test piece is exposed to the environment of the relatively low temperature state (exposure process).

Next, by the heater, water in the water reservoir is heated to be vaporized. At this time, the heat quantity of the heater is controlled so that the temperature of the water in the water reservoir shows a constant rising curve. As the water in the water reservoir is vaporized, a humidity (relative humidity, hereinafter the same) in the test chamber increases, and when water vapor comes into contact with the low-temperature test piece, the water vapor condenses and dew condensation is caused to generate water droplets (hereinafter, water droplets will also be referred to as dew condensation) (dew condensation generation process).

After that, a humidity in the test chamber is lowered and the dew condensation is evaporated. In addition, a temperature in the test chamber is lowered (temperature lowering process).

By lowering a temperature in the test chamber, the temperature of water in the water reservoir decreases. That is to say, water in the water reservoir is cooled by air in the test chamber.

The dew condensation test disclosed in Patent Literature 1 includes, as one test cycle, the exposure process in which the inside of the test chamber is maintained in a relatively low temperature state and the test piece is exposed to a low-temperature environment, the dew condensation generation process in which water in the water reservoir is heated and vaporized to cause dew condensation on the test piece, and the temperature lowering process in which the dew condensation is evaporated by lowering a humidity in the test chamber and a temperature in the test chamber is also lowered, and the test cycle is repeated a multitude of times.

### CITATION LIST

### PATENT LITERATURE

[Patent Literature 1] JP6092816B

### SUMMARY OF INVENTION

### TECHNICAL PROBLEM

In the dew condensation test according to the related art, the test is started with water filled in the water reservoir, and a series of test cycles are repeated using the water. In principle, in the middle of the test, water in the water reservoir is not replaced or new water is not supplied.

Therefore, when using the dew condensation testing device according to the related art, water in the water reservoir may concentrate as the number of test cycles increases.

In other words, in the dew condensation test, dew condensation (water droplets) is forcibly formed on the surface of the test piece, and an organic and inorganic substance originating from the test piece may be mixed in the dew condensation. When the condensation droplet falls into the water reservoir, an impurity originating from the test piece may be mixed in water in the water reservoir.

Since water in water reservoir is heated and evaporated a plurality of times in the dew condensation test, there is a possibility that an impurity in the water reservoir concentrates.

Moreover, when a vaporizable substance such as oil, fat or the like is mixed in the dew condensation, the oil, fat or the like may be vaporized again to adhere to the test piece, which may exert a negative influence on the dew condensation test.

Thus, the present inventors have decided to replace water in the water reservoir each time one test cycle is ended.

In a prototype dew condensation testing device, a water supply tank is installed outside a test chamber, and water is supplied from the water supply tank to a water reservoir installed in the test chamber. However, when a dew condensation test is performed using a prototype machine in such a way to replace water in the water reservoir each time one test cycle is ended, a problem rises in that there is a case where a water temperature in the water reservoir at the time of starting a test cycle does not fall within a predetermined range.

The reason why the water temperature in the water reservoir does not fall within the predetermined range is expected to reside in that a water temperature in the water supply tank installed outside the test chamber is affected by the temperature of a place where the dew condensation testing device is installed.

The present invention has been made to solve the above-described new problem, and an objective of the present invention is to provide a dew condensation testing device capable of supplying water to a water reservoir and falling a water temperature in the water reservoir at the time of starting a test cycle within a predetermined range.

### SOLUTION TO PROBLEM

An aspect for solving the above-described problems provides a dew condensation testing device, including: a test chamber configured such that a test piece is disposed therein; an air conditioning means configured to adjust an environment in the test chamber; a water reservoir which is disposed in the test chamber and is configured to be supplied with water from outside the test chamber; and a heating means. The dew condensation testing device is configured to heat water in the water reservoir by using the heating means to increase a humidity in the test chamber so as to generate dew condensation on the test piece. The dew condensation testing device includes a heat exchanger, the heat exchanger being in the test chamber, and water which has passed through the heat exchanger is to be supplied to the water reservoir.

The dew condensation testing device according to this aspect includes air conditioning means, and a temperature or the like in the test chamber is adjusted by the air conditioning means. Moreover, the dew condensation testing device according to this aspect includes a heat exchanger, the heat exchanger is in the test chamber and water which has passed through the heat exchanger is supplied to the water reservoir. Therefore, water which passes through the heat exchanger exchanges heat with air in the test chamber, and a temperature of water supplied to the water reservoir falls within a predetermined range.

In the above-described aspect, it is desirable to include a drain valve configured to discharge the water in the water reservoir, and is desirable that the drain valve is configured to be opened and closed by an electrical signal.

Since the dew condensation testing device according to this aspect includes the drain valve, water in the water reservoir can be drained and replaced with newly supplied water. Further, since the drain valve is opened and closed by an electrical signal, the drain valve can be opened at an appropriate time by a signal from a control device or the like.

In the above-described aspect, it is desirable that the heat exchanger is a spiral tube.

The heat exchanger adopted in the dew condensation testing device according to this aspect has a simple structure, and can maintain the temperature of water supplied to the water reservoir at a constant level.

In the above-described aspect, it is desirable that the heat exchanger is provided in a plural number.

According to this aspect, a temperature of water supplied to the water reservoir becomes more stable.

In the above-described aspect, it is desirable that the heat exchanger is positioned near a side wall of the test chamber.

According to this aspect, it is possible to suppress dew condensation before vapor generated from the water reservoir reaches the test piece. Therefore, more dew condensation can be generated on the test piece.

In the above-described aspect, it is desirable to include a holding member configured to hold the heat exchanger, and is desirable that an air vent is provided in the holding member.

In the dew condensation testing device according to this aspect, the heat exchanger is held by the holding member. Since the holding member adopted in this aspect is provided with the air vent, ventilation to the heat exchanger is secured while holding the heat exchanger, thereby achieving high heat exchange efficiency.

An aspect related to a dew condensation testing method provides a dew condensation testing method performed by using the dew condensation testing device according to any one of the above descriptions, the method including: an exposure process in which a temperature in the test chamber is adjusted to a constant temperature and the test piece is exposed to a temperature environment thereof; a dew condensation generation process in which water in the water reservoir is heated by the heating means to increase a humidity in the test chamber so as to generate dew condensation on the test piece; a temperature lowering process, as a process subsequent to the dew condensation generation process, which includes lowering a temperature in the test chamber by the air conditioning means; and a water supplying process in which, in parallel with the exposure process, water is supplied to the water reservoir via the heat exchanger from outside the test chamber.

In the dew condensation testing method according to this aspect, since water is supplied to the water reservoir in each test cycle, concentration of an impurity is less likely to occur. Furthermore, since the temperature of water supplied to the water reservoir can fall within a predetermined range, a highly reliable dew condensation test can be performed.

### ADVANTAGEOUS EFFECTS OF INVENTION

The dew condensation testing device according to the present invention can supply water to a water reservoir for dew condensation. In addition, in the dew condensation testing device according to the present invention, the temperature of water supplied to the water reservoir is stable, and a water temperature in the water reservoir at the time of starting a test cycle can fall within a predetermined range.

### BRIEF DESCRIPTION OF DRAWINGS

FIG. 1 is a perspective view of a dew condensation testing device according to an embodiment of the present invention.
FIG. 2 is a sectional view of a heat insulation chamber of the dew condensation testing device of FIG. 1.
FIG. 3 is a sectional view taken along the line A-A of FIG. 2.
FIG. 4 is a perspective view of the inside of a test chamber of the dew condensation testing device of FIG. 1.
FIG. 5 is a perspective view of a heat exchanger and a holding member.
FIG. 6 is a piping system diagram of the dew condensation testing device of FIG. 1.
FIG. 7 is a flowchart of a dew condensation test.
FIG. 8 shows situations of respective components in a dew condensation test, in which (a) is a graph showing changes in temperature and humidity in the test chamber, (b) is a graph showing a change in the temperature of water in a water container, (c) is a time chart showing the opening and closing of a drain valve, (d) is a time chart showing the on/off of a pump, and (e) is a time chart showing the on/off of air conditioning equipment.

### DESCRIPTION OF EMBODIMENTS

Hereinafter, an embodiment according to the present invention will be described.

A dew condensation testing device 1 according to the present embodiment includes a main body device 2 and a humidifying device 50 for dew condensation.

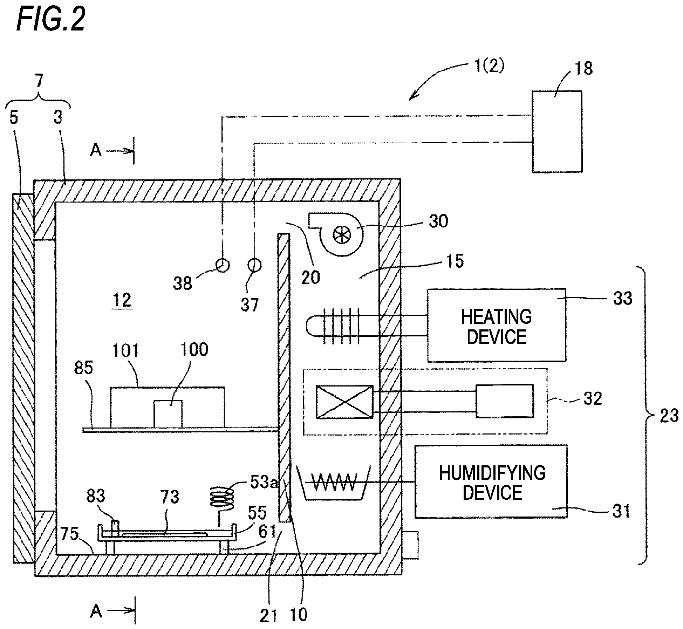

As shown in FIG. 2, the main body device 2 is a device including a test chamber 12 in which a test piece 100 is disposed and air conditioning equipment 23 (air conditioning means) which adjusts an environment in the test chamber 12.

The upper part of the main body device 2 is configured by a heat insulation chamber 7. As shown in FIG. 2, the heat insulation chamber 7 has a main body portion 3 and a door 5.

As shown in FIG. 2, there is a partition wall 10 inside the heat insulation chamber 7 on the inner chamber side of the main body portion 3, and the inside of the heat insulation chamber 7 is divided into a test chamber 12 and an air conditioning portion 15 by the partition wall 10.

Openings are provided at upper and lower ends of the partition wall 10. The opening at the upper end of the partition wall 10 functions as an air blowing portion 20, and the opening at the lower end of the partition wall 10 functions as an air introducing portion 21.

The test chamber 12 and the air conditioning portion 15 communicate with each other at two points including the air blowing portion 20 and the air introducing portion 21.

The air conditioning portion 15 is an air conditioning ventilation path that communicates with the test chamber 12 in an annular style, and the air conditioning equipment 23 and a blower 30 are disposed in the air conditioning portion 15. The air conditioning equipment 23 is configured by a humidifying device 31, a cooling device 32 and a heating device 33. As is well known in the art, the cooling device 32 has a cooling function for lowering a temperature in the test chamber 12 and a dehumidifying function for lowering a humidity in the test chamber 12.

When the blower 30 is activated, air in the test chamber 12 is introduced into the air conditioning portion 15 from the air introducing portion 21. Then, the air conditioning portion 15 becomes a ventilation state, air comes into contact with the air conditioning equipment 23 to perform heat exchange and humidity adjustment, and air after adjustment is blown out from the air blowing portion 20 into the test chamber 12.

In addition, a temperature sensor 37 and a humidity sensor 38 are installed near the air blowing portion 20.

Signals from the temperature sensor 37 and the humidity sensor 38 are input to a control device 18. Then, the control device 18 compares detected values of the temperature sensor 37 and the humidity sensor 38 with set values, respectively.

The main body device 2 can create a desired environment in the test chamber 12. The control device 18 operates the blower 30 to convert the air conditioning portion 15 into a ventilation state, and controls the air conditioning equipment 23 so that the detected values of the temperature sensor 37 and humidity sensor 38 approach the temperature and the humidity of a set environment.

Namely, by operating the blower 30, air in the test chamber 12 is introduced from the air introducing portion 21 into the air conditioning portion 15, and passes through the air conditioning equipment 23 in the air conditioning portion 15 so that a temperature and a humidity are adjusted. Then, air whose temperature and humidity have been adjusted is returned to the test chamber 12 from the air blowing portion 20, and an environment with desired temperature and humidity is created in the test chamber 12.

Next, the humidifying device 50 for dew condensation will be described.

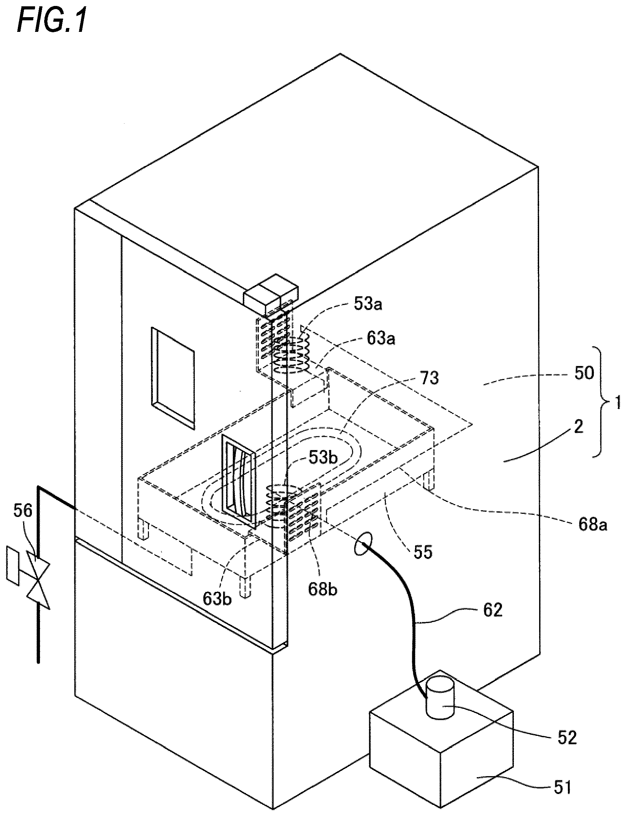

As shown in FIG. 1, the humidifying device 50 for dew condensation includes a water supply tank 51, a water supply pump 52, heat exchangers 53a and 53b, a water container (water reservoir) 55, and a drain valve 56.

Further, as shown in FIGS. 2, 3 and 4, a heater (heating means) 73 for dew condensation is installed in the water container (water reservoir) 55.

The water supply tank 51 is a known tank made of resin. The water supply pump 52 is a known electric pump.

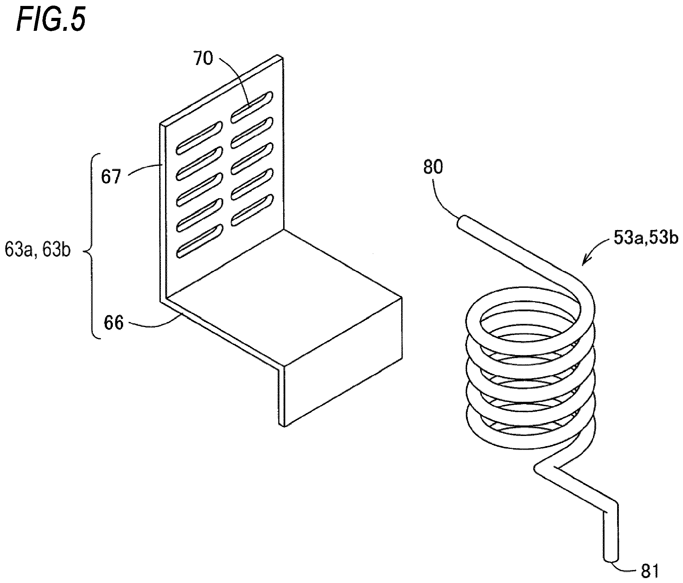

As shown in FIGS. 2, 3 and 4, the heat exchangers 53a and 53b have coil-shapes in which bare copper pipes are wound in a spiral shape, and a series of water passage is formed in each of the heat exchangers. The heat exchangers 53a and 53b are arranged vertically as shown in FIG. 5, and water inlet ports 80 are formed at upper sides thereof. Lower ends of the heat exchangers 53a and 53b form outlet ports 81, and are bent downward.

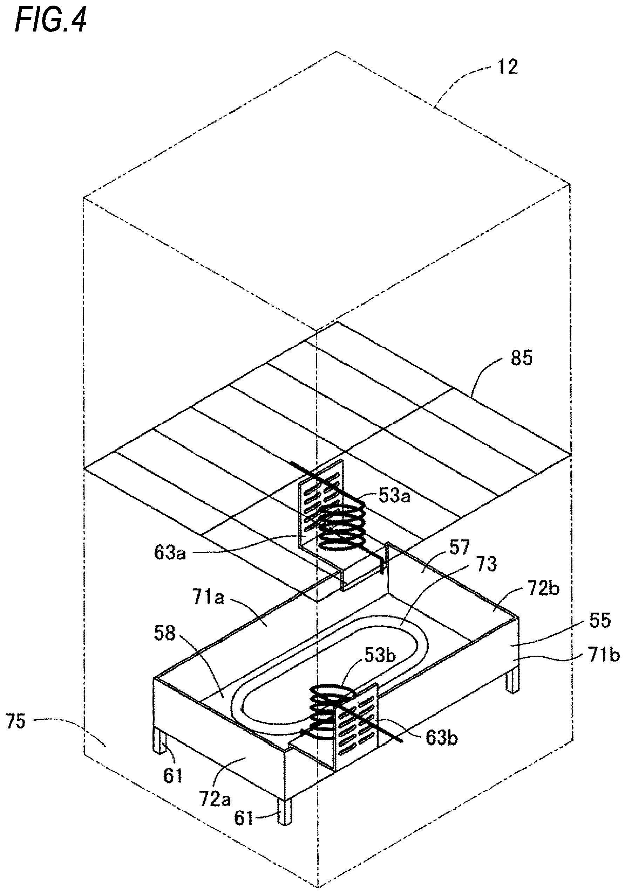

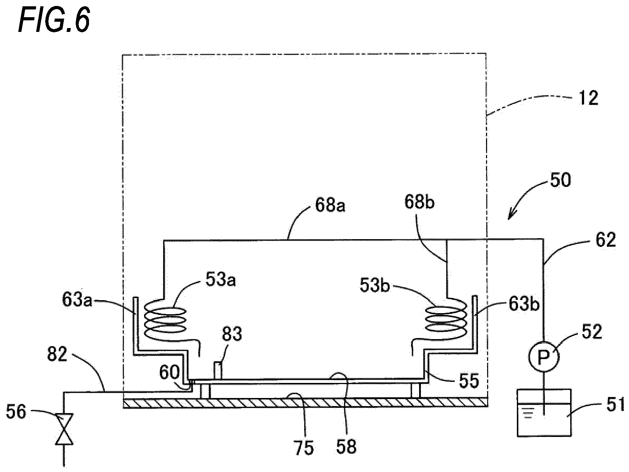

The water container (water reservoir) 55 is a shallow-bottomed tray made of metal, resin or ceramic. As shown in FIG. 4, the water container (water reservoir) 55 has a bottom portion 58 and four vertical walls 71a, 71b, 72a and 72b, and is completely open at the upper surface side thereof. That is to say, the water container 55 has an opening 57 at the upper surface side thereof. The bottom portion 58 of the water container 55 has a drain port 60 (see FIG. 6). The water container 55 adopted in the present embodiment has a rectangular planar shape.

The water container 55 has legs 61, and a part of the water container 55 in which water is stored is supported by the legs 61 to be lifted from a floor.

A water temperature sensor 83 (see FIG. 2) is attached to the water container 55.

The heater (heating means) 73 for dew condensation is disposed at the bottom of the water container 55. The heater (heating means) 73 for dew condensation is a known electric heater.

The drain valve 56 is a known solenoid valve, and is opened and closed by an electrical signal.

In the present embodiment, as shown in FIG. 4, the heat exchangers 53a and 53b are held by holding members 63a and 63b, and are attached to the sides of the water container 55.

As shown in FIG. 5, the holding members 63a and 63b are "L"-shaped plates, and each has a horizontal wall 66 and a vertical wall 67. A plurality of air vents 70 are provided in the vertical wall 67. The air vents 70 are rectangular slits.

As shown in FIG. 4, one holding member 63a is attached to one end of the vertical wall 71a on one long side of the water container 55, and the other holding member 63b is attached to the other end of the vertical wall 71b on the other long side of the water container 55.

Free ends of the horizontal walls 66 of the holding members 63a and 63b are connected to upper ends of the vertical walls 71a and 71b on the long sides of the water container 55. Therefore, the holding members 63a and 63b are attached in a state in which the holding members 63a and 63b protrude laterally from the vertical walls 71a and 71b, respectively, on the long sides of the water container 55.

The heat exchangers 53a and 53b are fixed to the holding members 63a and 63b by metal fittings (not shown). Since the heat exchangers 53a and 53b are positioned in the areas surrounded by the horizontal walls 66 and the vertical walls 67 of the holding members 63, the heat exchangers 53a and 53b are positioned on the sides of the opening 57 of the water container 55, and do not overlap with the opening 57 when viewed on a plane.

Furthermore, the lowermost portions of the spiral parts of the heat exchangers 53a and 53b are positioned above the heightwise position of the opening 57 of the water container 55. In other words, the positions of the spiral parts of the heat exchangers 53a and 53b in a height direction are positions that are generally higher than the opening 57 of the water container 55.

The lowermost portions of the heat exchangers 53a and 53b including the outlet ports 81 are positioned at a position higher than an assumed water level of the water container 55.

The two heat exchangers 53a and 53b are positioned outside the water container 55, and are positioned at diagonally opposite positions.

As shown in FIGS. 2, 3 and 4, the water container 55 and the heat exchangers 53a and 53b are disposed in the test chamber 12 of the main body device 2.

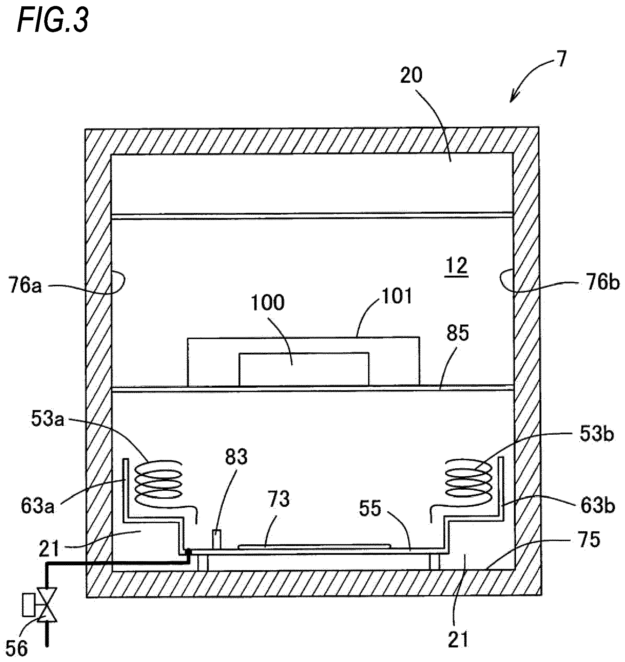

In detail, the legs 61 of the water container 55 are in contact with a floor 75 of the test chamber 12, and the bottom portion 58 of the water container 55 is lifted from the floor 75. As shown in FIG. 3, the water container 55 is positioned at the center of the test chamber 12 in a width direction when viewed from the door 5, and the two heat exchangers 53a and 53b are at positions near side walls 76a and 76b of the test chamber 12.

In the present embodiment, the water container 55 and the heat exchangers 53a and 53b are integrated with each other, and can be attached to and detached from the test chamber 12.

The water supply tank 51, the water supply pump 52 and the drain valve 56 are positioned outside the main body device 2 as shown in FIG. 1. Namely, the water supply tank 51, the water supply pump 52 and the drain valve 56 are positioned outside the test chamber 12.

Respective components which configure the humidifying device 50 for dew condensation are connected by pipes as shown in FIGS. 1 and 6.

That is to say, a suction part of the water supply pump 52 is inserted into the water supply tank 51. A water supply pipe 62 to which the water supply pump 52 is connected is branched to two branch pipes 68a and 68b in the test chamber 12 to be connected to the water inlet ports 80 on the upper sides of the heat exchangers 53a and 53b. In other words, the branch pipe 68a is connected to the water inlet port 80 of the upper side of the heat exchanger 53a, and the branch pipe 68b is connected to the water inlet port 80 of the upper side of the heat exchanger 53b.

The outlet ports 81 on the lower sides of the heat exchangers 53a and 53b are disposed to be positioned above the water surface of the water container (water reservoir) 55. Namely, the outlet ports 81 of the heat exchangers 53a and 53b are open to a space above the water surface of the water container (water reservoir) 55.

The drain port 60 provided in the bottom portion 58 of the water container 55 is led to the outside of the test chamber 12 via a drain pipe 82, and is connected to the drain valve 56.

Heat-resistant tubes such as silicon tubes are used for pipes (the branch pipes 68a and 68b and the drain pipe 82) in the test chamber 12.

Water in the water supply tank 51 is sucked into the water supply pump 52, and is introduced into the water inlet ports 80 on the upper sides of the heat exchangers 53a and 53b. The water introduced into the heat exchangers 53a and 53b flows to the outlet ports 81 by passing through spiral conduits, to be introduced into the water container (water reservoir) 55.

Since the heat exchangers 53a and 53b are positioned in the test chamber 12, water flowing through the heat exchangers 53a and 53b exchanges heat with air inside the test chamber 12 while passing through the spiral conduits, and the temperature thereof changes. If a temperature in the test chamber 12 is lower than a room in which the water supply tank 51 is placed, the heat of water is radiated to the test chamber 12 while water passes through the heat exchangers 53a and 53b, and thus, the temperature of water introduced into the water container (water reservoir) 55 becomes lower than a water temperature in the water supply tank 51.

When the drain valve 56 is opened, water in the water container (water reservoir) 55 is drained to the outside of the test chamber 12.

The dew condensation testing device 1 according to the present embodiment is a device which performs a dew condensation test.

In a dew condensation test, as shown in FIGS. 2, 3 and 4, a shelf 85 with substantially high air permeability such as a net is installed at the middle height of the test chamber 12, and the test piece 100 is placed on the shelf 85. The test piece 100 is placed directly above the plane of the water container 55. The test piece 100 is covered with a cover member 101 which has no air permeability.

As aforementioned, a dew condensation test includes an "exposure process" in which the inside of a test chamber is first maintained in a relatively low temperature state and a test piece is exposed to the environment of the relatively low temperature state, a "dew condensation generation process" in which water in the water container 55 is heated to vaporize the water in the water container 55 and a humidity in the test chamber 12 is increased to generate dew condensation on the test piece, and a "temperature lowering process" in which a temperature and a humidity are lowered after maintaining the environment of a relatively high temperature state. These processes are repeated.

In the present embodiment, in addition to these processes, a "water supply process" in which water supplied from the outside of the test chamber 12 and having passed through the heat exchangers 53a and 53b is supplied to the water container 55 and a "drainage process" in which water in the water container 55 is drained are automatically performed by a signal from the control device 18. The water supply process is performed in parallel with the exposure process. The drainage process is performed in parallel with the temperature lowering process.

In the dew condensation testing device 1 according to the present embodiment, a program for automatically executing the respective processes of the dew condensation test is stored in the control device 18.

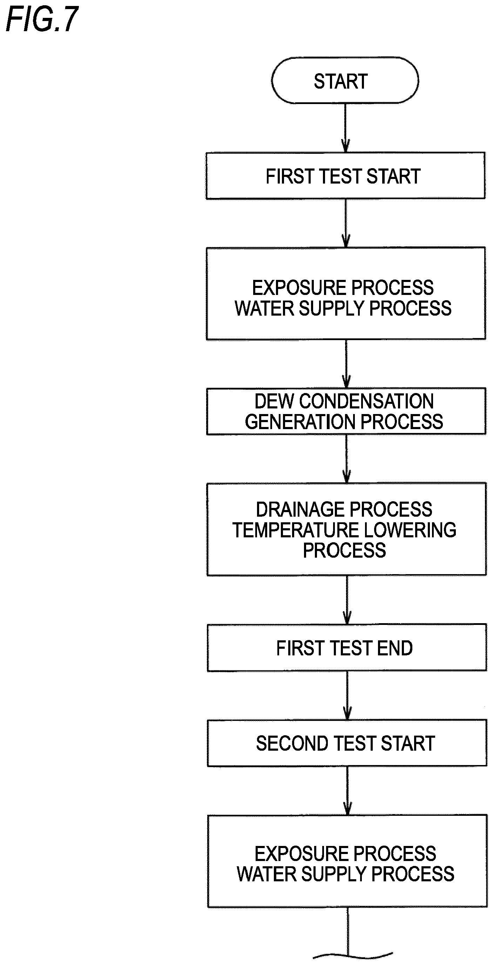

That is to say, in the dew condensation testing device 1 according to the present embodiment, a series of processes shown in the flowchart of FIG. 7 are automatically executed by a computer built in the control device 18. In detail, as one test cycle, the exposure process · the water supply process, the dew condensation generation process, and the drainage process · the temperature lowering process are sequentially executed.

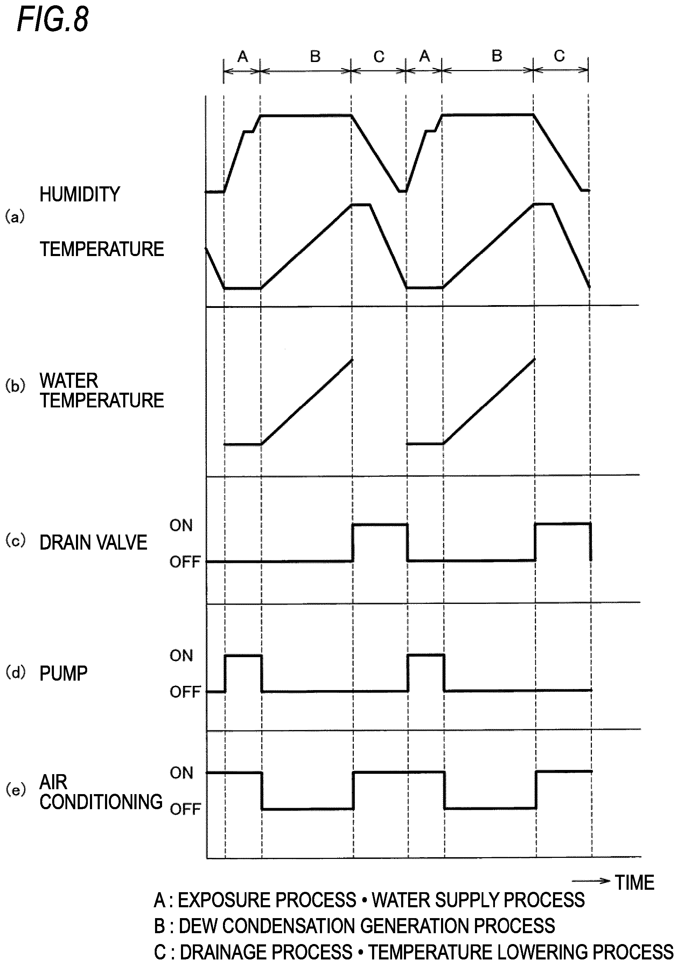

Furthermore, in the dew condensation test, a temperature and a humidity in the test chamber 12 follow a trajectory like the graph shown in (a) of FIG. 8. As shown in (b) of FIG. 8, there are times when water is present and is not present in the water container 55, and the temperature of water follows a trajectory like the graph shown in (b) of FIG. 8. The drain valve 56 is opened only during the drainage process, and is opened and closed by being turned on and off according to the timing shown in (c) of FIG. 8. In detail, at the time of ending the dew condensation generation process, the drain valve 56 is turned on to drain water in the water container 55. The water supply pump 52 is driven only during the water supply process, and is driven and stopped by being turned on and off according to the timing shown in (d) of FIG. 8. In detail, the water supply pump 52 is driven at the time of starting the exposure process to supply water into the water container 55. The air conditioning equipment 23 is driven and stopped according to the timing shown in (e) of FIG. 8. In detail, the air conditioning equipment (air conditioning means) 23 is driven during the exposure process · the water supply process and the drainage process • the temperature lowering process, and is stopped during the dew condensation generation process.

Hereinafter, the contents of the dew condensation test will be sequentially described.

The exposure process is a process that is performed during the time band of a period A of FIG. 8. In the exposure process, by driving the air conditioning equipment 23 as shown in (e) of FIG. 8, a temperature in the test chamber 12 is controlled to a low temperature of about 10 degrees Celsius as shown in (a) of FIG. 8, and the test piece 100 is exposed to this low-temperature environment for a predetermined time. By placing the test piece 100 in the low-temperature environment for the predetermined time, the surface temperature and internal temperature of the test piece 100 become as low as the temperature in the test chamber 12.

Also, in the exposure process, in order to be smoothly connected to the dew condensation generation process being the next process, a humidity in the test chamber 12 is increased as shown in (a) of FIG. 8. In detail, as the humidifying device 31 of the air conditioning equipment 23 is driven, a humidity in the test chamber 12 is increased.

The water supply process is a process in which, as shown in (d) of FIG. 8, water in the water supply tank 51 is sucked up by activating the water supply pump 52 and is introduced into the water container 55 via the heat exchangers 53a and 53b. At this time, water passes through the heat exchangers 53a and 53b without staying in the heat exchangers 53a and 53b. During the water supply process, the drain valve 56 is closed as shown in (c) of FIG. 8.

The water supply process is a process that is performed during the time band of the period A of FIG. 8, and is performed in parallel with the exposure process. In the step of the exposure process, the inside of the test chamber 12 has a low temperature as shown in (a) of FIG. 8. Since the heat exchangers 53a and 53b are disposed in the test chamber 12, the heat exchangers 53a and 53b are in a low temperature environment, and water passing through the heat exchangers 53a and 53b loses heat and decreases in its temperature. Accordingly, the water container 55 is supplied with water cooled by the heat exchangers 53a and 53b. Moreover, since a temperature in the test chamber 12 is controlled to a constant temperature by the air conditioning equipment 23, the temperature of water discharged from the heat exchangers 53a and 53b is relatively low.

In the present embodiment, the two heat exchangers 53a and 53b are installed in the test chamber 12, and water supplied by being branched from the water supply pipe 62 passes through these heat exchangers 53a and 53b. Therefore, water supplied to the water container 55 has a temperature relatively close to a temperature in the test chamber 12.

Further, in the main body device 2 adopted in the present embodiment, temperature-controlled air is blown out from the air blowing portion 20 to the test chamber 12, and air in the test chamber 12 is sucked into the air introducing portion 21. Therefore, the inside of the test chamber 12 becomes a ventilated environment, and air hits the heat exchangers 53a and 53b to promote heat exchange. In particular, since the holding members 63a and 63b of the heat exchangers 53a and 53b adopted in the present embodiment are provided with the plurality of air vents 70 in the vertical walls 67, the passage of air is not hindered. Thus, since there are many opportunities for contact between air and the heat exchangers 53a and 53b, high heat exchange efficiency is achieved.

In addition, in the water supply process, as shown in (d) of FIG. 8, the water supply pump 52 is driven for a predetermined time during the time band of the period A of FIG. 8, and when a required amount of water is introduced into the water container 55, the water supply pump 52 is stopped.

Here, in the present embodiment, the height of each of the outlet ports 81 of the heat exchangers 53a and 53b is set to a position higher than the water surface of the water container 55. Therefore, water in the heat exchangers 53a and 53b is discharged by being replaced with air, making it difficult for water to remain in the heat exchangers 53a and 53b.

In other words, in the present embodiment, water is introduced into the water inlet ports 80 of the upper sides of the heat exchangers 53a and 53b, and is discharged from the outlet ports 81 of the lower sides of the heat exchangers 53a and 53b. Therefore, water in the heat exchangers 53a and 53b is urged downward by gravity. On the other hand, since the outlet ports 81 of the lower sides are not in contact with the water surface and are open to a space, the outlet ports 81 are in a state in which air may easily enter the outlet ports 81. Moreover, each of the heat exchangers 53a and 53b does not have anything which blocks the inside thereof, such as a valve. Therefore, air enters the heat exchangers 53a and 53b from the outlet ports 81, and water in the heat exchangers 53a and 53b is discharged by being replaced with air.

The dew condensation generation process is a process that is performed during the time band of a period B of FIG. 8. In the dew condensation generation process, the heater (heating means) 73 for dew condensation is energized to heat water in the water container (water reservoir) 55. It is desirable that an increase in water temperature shows a predetermined rising curve. Thus, in the present embodiment, a water temperature in the water container 55 is monitored by the water temperature sensor 83, and the heater 73 for dew condensation is PID-controlled so that an increase in water temperature shows a constant rising curve. As a result, the temperature of water in the water container 55 increases following a trajectory like the graph shown in (b) of FIG. 8.

According to the dew condensation testing device 1 of the present embodiment, since the temperature of water supplied from the outside of the test chamber 12 to the water container 55 in the foregoing water supply process is stabilized in a low state, the water temperature of the water container 55 at the time of starting the dew condensation generation process is relatively low. Therefore, an increase in water temperature in the dew condensation generation process can be started from a low water temperature state, and it is possible to achieve an ideal temperature increase.

In the dew condensation generation process, water is vaporized due to an increase in water temperature, and, as shown in (a) of FIG. 8, a humidity in the test chamber 12 becomes a saturated state or a state close thereto.

Since the temperature of the test piece 100 has been lowered by the exposure process through the period A, water vapor condenses on the surface of and inside the test piece 100, resulting in dew condensation.

Further, in the present embodiment, the water container 55 is positioned at the center of the lower part of the test chamber 12, and the heat exchangers 53a and 53b are positioned at laterally protruding positions. Making description in relation to the test chamber 12, the two heat exchangers 53a and 53b are positioned close to the side walls 76a and 76b of the test chamber 12.

Therefore, the heat exchangers 53a and 53b are positioned at positions away from the opening 57 of the water container 55, and the heat exchangers 53a and 53b do not obstruct the rise of water vapor generated from the water container 55. Namely, there is no substantial obstacle between the opening 57 of the water container 55 and the test piece 100, and water vapor generated from the water container 55 rises straight up to be trapped in the cover member 101.

Therefore, a large amount of dew condensation can be generated on the surface of and inside the test piece 100.

Also, as described above, in the present embodiment, it is difficult for water to stay in the heat exchangers 53a and 53b. Therefore, a heat load is small compared to a case where water remains in the heat exchangers 53a and 53b. Thus, in the dew condensation generation process, it is difficult to hinder increases in temperature and humidity in the test chamber 12, and a large amount of dew condensation can be generated on the surface of and inside the test piece 100.

During the period B in which the dew condensation generation process is performed, the air conditioning equipment 23 is stopped as shown in (e) of FIG. 8. In the dew condensation generation process, since water in the water container 55 is in a high-temperature state, a temperature in the test chamber 12 increases following a water temperature as in the graph shown in (a) of FIG. 8.

When the dew condensation generation process is ended, the drainage process is performed. That is to say, in a period C after the end of the dew condensation generation process, by a signal from the control device 18, the drain valve 56 is opened as shown in (c) of FIG. 8, and water in the water container 55 is drained. By this way, humidification by water vapor from the water container 55 is stopped.

In addition, the temperature lowering process is performed in parallel with the drainage process. The temperature lowering process is a process that is performed during the time band of the period C of FIG. 8.

In the temperature lowering process, the air conditioning equipment 23 is driven again as shown in (e) of FIG. 8 to lower a temperature in the test chamber 12 to return to a low temperature of about 10 degrees Celsius as in the graph shown in (a) of FIG. 8 and to lower a humidity at the same time. As a result, dew condensation adhered to the test piece 100 evaporates. In other words, the temperature lowering process functions as a drying process for the test piece 100.

Since water in the water container 55 is drained in the drainage process as described above, humidification is stopped in the temperature lowering process. Therefore, in the temperature lowering process, a humidity in the test chamber 12 decreases quickly, and as a result, the evaporation of dew condensation adhered to the test piece 100 is promoted.

Furthermore, because high-temperature water in the water container 55 is discharged by the above-described drainage process, the temperature of the test chamber 12 is smoothly lowered. Namely, since water is a substance with a large heat capacity, a large amount of cold heat is required to lower temperature. In the present embodiment, since high-temperature water in the water container 55 is discharged by the drainage process, thermal energy held by the water in the water container 55 does not impede lowering the temperature of the test chamber 12.

One test cycle ends by the above processes.

In the present embodiment, in succession, a second test and a third test are performed.

In a subsequent dew condensation test, in the same manner as in the first dew condensation test described above, an exposure process · a water supply process, a dew condensation generation process and a drainage process · a temperature lowering process are sequentially performed.

Here, the second exposure process is performed following the temperature lowering process of the first dew condensation test.

Since a temperature inside the test chamber 12 has been lowered in the first temperature lowering process, the second exposure process maintains the temperature of the test chamber 12 that is lowered in the first temperature lowering process. On the other hand, since a humidity in the test chamber 12 has been lowered by the first temperature lowering process, when the second exposure process is started, a humidity in the test chamber 12 increases by the air conditioning equipment 23.

At the time of starting a second dew condensation test, the inside of the water container 55 is empty, and water is newly supplied to the water container 55 by a second water supply process. In this way, according to the present embodiment, water in the water container 55 is replaced in each test cycle. Therefore, it is possible to suppress an impurity originating from the test piece 100 from concentrating, and a test cycle can be repeated under the same condition in each time.

In the embodiment described above, as an example of a heat exchanger, a structure in which a bare copper pipe is wound in a coil shape is exemplified, but the present invention is not limited to the structure.

For example, a finned tube such as an aerofin tube may be used as a heat exchanger, and the tube may be simply pulled around the test chamber 12. Also, a plate fin heat exchanger may be used.

The number of heat exchangers is arbitrary, and may be one, or three or more. That is to say, the number of heat exchangers may be singular or plural.

In the main body device 2 adopted in the embodiment described above, the test chamber 12 and the air conditioning portion 15 communicate with each other at two places including the air blowing portion 20 at the upper side and the air introducing portion 21 at the lower side. Thus, air is introduced into the air conditioning portion 15 from the air introducing portion 21 at the lower side, and conditioned air is blown out into the test chamber 12 from the air blowing portion 20 at the upper side. However, the present invention is not limited to this configuration.

In other words, the layout and components of a test chamber and an air conditioning portion are arbitrary. Thus, air may be introduced into the air conditioning portion 15 from an upper side, and may be blown out into the test chamber 12 from a lower side. Moreover, air may be blown out from near the center of an inner wall, or air may be blown out from left and right directions of the inner wall. The air conditioning portion may be positioned at a lower part of the test chamber, and air may enter and exit from the floor side of the test chamber.

The type of the blower is arbitrary, and may be a centrifugal blower such as a sirocco fan or may be an axial blower.

In the embodiment described above, a solenoid valve or the like which is opened and closed by an electrical signal is used as the drain valve 56, but a manual valve may be adopted instead.

In the embodiment described above, in each test cycle, water in the water container 55 is drained by opening the drain valve 56 and is replaced, but this configuration is not essential. For example, water may be drained with an interval of a predetermined number of cycles. When this configuration is adopted, it is desirable to use a manual valve as a drain valve.

In the embodiment described above, the humidifying device 50 for dew condensation is provided with the drain valve 56, but the drain valve 56 is not essential. For example, it is also possible to provide an overflow portion such as an overflow pipe to the water container 55 and drain excessive water from the overflow portion.

Also, the act of replacing water in the water container 55 is not essential. Namely, a motive for creating the present invention is to suppress concentration of water in the water container 55. Therefore, the present invention can be applied even in the case where a dew condensation test is continued by simply replenishing water without replacing water in the water container 55. Also, in this case, the drain valve 56 is not essential.

Even in these modified examples, since water is supplied from the outside, a water temperature in a water reservoir at the time of starting a test cycle may not fall within a predetermined range, and thus, it is recommended to adopt the configuration of the present invention. In particular, in a test cycle performed for the first time, since water is supplied from the water supply tank 51 to the empty water container 55, there is a case where a water temperature in the water supply tank 51 installed outside the test chamber 12 is affected by the temperature of a place where the dew condensation testing device is installed and thus a water temperature in the water container 55 may not fall within a predetermined range. By applying the present invention, this problem is solved.

The adjustment of an amount of water supplied to the water container 55 can be controlled by, for example, the driving time of the water supply pump 52. Further, a water amount sensor such as a float may be installed in the water container 55. An overflow pipe or the like may be installed in the water container 55.

As in the above-described embodiment, it is desirable that the water supply process is started at the time of starting the exposure process. However, the present invention is not limited thereto, and water supply may be started in the middle of the exposure process.

Similarly, it is desirable that the drainage process is started at the time of starting the temperature lowering process. However, the present invention is not limited thereto, and drainage may be started in the middle of the temperature lowering process.

In the description of the temperature lowering process and the graph of FIG. 8, an environment of a relatively high-temperature state is maintained at an initial stage of the temperature lowering process. However, it is not essential to maintain an environment of a relatively high-temperature state in the temperature lowering process. In the case where an experimental program in which a high-temperature state is not maintained is adopted, a drainage process may be performed during the temperature lowering.

In the above-described embodiment, the water supply tank 51 and the water supply pump 52 are installed outside the main body device 2, but these components may be disposed inside the main body device 2. For example, the water supply tank 51 and the like may be provided at a lower part of the heat insulation chamber 7. Even in this case, since a water temperature in the water supply tank 51 is affected by the temperature of a room in which the main body device 2 is installed, the effect of the present invention can be achieved. Furthermore, since there is a heat source such as a compressor inside the main body device 2, there is a case where the temperature of air in the main body device 2 is high. Therefore, when a layout in which the water supply tank 51 is installed within the main body device 2 is adopted, it is recommended that the configuration of the present invention be adopted.

The water supply tank 51 and the water supply pump 52 are not essential, and water may be supplied to the water container 55 by directly connecting a water pipe, for example. By installing the water supply tank 51 at a high position and supplying water to the water container 55 by gravity, the water supply pump 52 may be omitted. The water supply tank 51 may be used not only for the dew condensation testing device 1 but also for other uses.

In summary, the water supply tank 51 and the water supply pump 52 do not have to be parts of the dew condensation testing device 1 (the humidifying device 50 for dew condensation).

### REFERENCE SIGNS LIST

1 Dew condensation testing device
12 Test chamber
15 Air conditioning portion
23 Air conditioning equipment
50 Humidifying device
51 Water supply tank
52 Water supply pump
53a, 53b Heat exchanger
55 Water container (water reservoir)
56 Drain valve
63a, 63b Holding member
67 Vertical wall
70 Air vent
73 Heater (heating means)
100 Test piece
101 Cover member

## Claims

1. A dew condensation testing device (1), **characterized by** comprising:
a test chamber (12) configured such that a test piece (100) is disposed therein;
an air conditioning means configured to adjust an environment in the test chamber (12);
a water reservoir (55) which is disposed in the test chamber (12) and is configured to be supplied with water from outside the test chamber (12); and
a heating means (73),
wherein the dew condensation testing device (1) is configured to heat water in the water reservoir (55) by using the heating means (73) to increase a humidity in the test chamber (12) so as to generate dew condensation on the test piece (100), and
wherein the dew condensation testing device (1) comprises a heat exchanger (53a, 53b), the heat exchanger (53a, 53b) being in the test chamber (12), and water which has passed through the heat exchanger (53a, 53b) is to be supplied to the water reservoir (55).

2. The dew condensation testing device (1) according to claim 1, further comprising:
a drain valve (56) configured to discharge the water in the water reservoir (55),
wherein the drain valve (56) is configured to be opened and closed by an electrical signal.

3. The dew condensation testing device (1) according to claim 1, wherein the heat exchanger (53a, 53b) is a spiral tube.

4. The dew condensation testing device (1) according to claim 1, wherein the heat exchanger (53a, 53b) is provided in a plural number.

5. The dew condensation testing device (1) according to claim 1, wherein the heat exchanger (53a, 53b) is positioned near a side wall of the test chamber (12).

6. The dew condensation testing device (1) according to claim 1, further comprising:
a holding member (63a, 63b) configured to hold the heat exchanger (53a, 53b),
wherein an air vent (70) is provided in the holding member (63a, 63b).

7. A dew condensation testing method performed by using the dew condensation testing device (1) according to any one of claims 1 to 6, the method **characterized by** comprising:
an exposure process in which a temperature in the test chamber (12) is adjusted to a constant temperature and the test piece (100) is exposed to a temperature environment thereof;
a dew condensation generation process in which water in the water reservoir (55) is heated by the heating means (73) to increase a humidity in the test chamber (12) so as to generate dew condensation on the test piece (100);
a temperature lowering process, as a process subsequent to the dew condensation generation process, which includes lowering a temperature in the test chamber (12) by the air conditioning means; and
a water supplying process in which, in parallel with the exposure process, water is supplied to the water reservoir (55) via the heat exchanger (53a, 53b) from outside the test chamber (12).
